# NOUVEAU FASCICULE DE BREVET EUROPEEN

(11) **EP 1 622 461 B2**
(45) Date de publication et mention de la décision concernant l'opposition: **20.07.2011**
(45) Mention de la délivrance du brevet: 15.11.2006
(21) Numéro de dépôt: 04742656.4
(22) Date de dépôt: 06.05.2004
(51) Int. Cl.: A23B 4/07

(54) **INSTALLATION DE TRAITEMENT DE PRODUITS DE LA MER**
MEERESFRÜCHTEBEHANDLUNGSVORRICHTUNG
SEAFOOD PRODUCT PROCESSING INSTALLATION

(30) Priorité: 06.05.2003 FR 0305507
(43) Date de publication de la demande: 08.02.2006
(73) Titulaire: France Agro Industries, 44340 Bouguenais (FR)
(72) Inventeur: BESNARDEAU, Guy, Antananarivo 101 (MG)
(74) Mandataire: Michelet, Alain
(86) Numéro de dépôt international: PCT/FR2004/001094
(87) Numéro de publication internationale: WO 2004/098300

(56) Documents cités:
- EP-A1- 0 859 199
- EP-A2- 0 983 730
- ES-A- 2 142 739
- FR-A- 2 801 472
- US-A- 3 192 899
- US-A- 4 167 585
- US-A- 4 718 145
- US-A- 6 146 678

## Description

La présente invention concerne le domaine général des installations de traitement des produits de la mer, en particulier de crustacés type crevettes ou langoustines, et même de petits poissons ou similaires.

Les produits de la mer, genre crevettes ou langoustines notamment, peuvent subir différentes opérations de traitement, tels un refroidissement, une congélation, une cuisson, une décongélation, une simple mise à température ..., entre le moment de leur capture et celui de leur présentation à la vente auprès du consommateur.

Les opérations correspondantes sont de manière classique mises en oeuvre par des moyens d'application de liquides de traitement appropriés, bien souvent de l'eau ou une saumure ; pour cela, les produits à traiter sont généralement soumis à l'action de bains de liquide de traitement, ou placés sous des rampes d'aspersion de tels liquides, comme décrit par exemple dans le document FR-A-2 756 146 ou ES-A-2 142 739.

Mais les traitements par bains sont relativement longs ; ils nécessitent des volumes de liquide importants, et les installations nécessaires à leur mise en oeuvre sont de conception complexe.

D'autre part, les traitements par aspersion de liquides au moyen de buses s'avèrent difficiles à mettre en oeuvre, et sont peu efficaces.

La présente invention vise à remédier à ces inconvénients en proposant une installation de traitement des produits de la mer de conception simple, assurant de manière efficace une qualité homogène de transformation par au moins un liquide de traitement approprié, sans entraîner de détérioration des produits ; en outre, l'installation de traitement conforme à l'invention peut être mise en oeuvre pour une pluralité de traitements différents, et cela par simple modification du liquide de traitement.

L'installation de traitement de produits de la mer conforme à la présente invention comprend - au moins un poste de traitement muni de moyens d'application d'un liquide de traitement sur les produits de la mer, et - des moyens de convoyage desdits produits, pour assurer leur transport via notamment ledit ou lesdits postes de traitement. Et cette installation est caractérisée par le fait que les moyens d'application du liquide de traitement sont constitués de moyens d'apport en liquide de traitement dans une cuvette d'arrosage, laquelle cuvette d'arrosage est formée d'un élément de fond délimité par une ceinture de parois, lequel élément de fond forme une surface horizontale ou sensiblement horizontale s'étendant au dessus desdits moyens de convoyage, et est muni d'une pluralité de perforations permettant la distribution dudit liquide de traitement sous forme d'aspersion, lesquelles perforations occupent une surface horizontale ou sensiblement horizontale délimitant la surface de traitement desdits produits; en outre, lesdits moyens d'apport en liquide de traitement consistent en une rampe d'alimentation de forme générale tubulaire, dont le tronçon qui s'étend au-dessus de la cuvette d'arrosage est muni d'une pluralité d'orifices, assurant une répartition du liquide de traitement dans ladite cuvette d'arrosage.

Selon une forme préférée de réalisation, la distance entre la structure d'aspersion et le support des produits à traiter est au maximum de 25 cm.
Cette faible distance permet une aspersion à basse pression visant en particulier à limiter la détérioration des produits traités.

Selon une autre particularité, l'installation de traitement comporte en outre des moyens de récupération des liquides de traitement qui s'étendent au moins sous la surface de traitement, mais aussi sous le moyen de convoyage des produits à traiter. De préférence, ces moyens sont reliés à la structure d'aspersion en liquide de traitement par un système de pompage assurant le recyclage dudit liquide de traitement ; le recyclage en question est réalisé au travers d'un système de filtration, et il est associé à un moyen de contrôle et de gestion de la température dudit liquide. Cette organisation particulière nécessite un simple appoint permanent en liquide de traitement, ce qui permet de limiter le volume global dudit liquide utilisé au strict minimum, et aussi de réduire largement les problèmes de pollution lors de la mise à l'égout des liquides ayant servi au traitement ; elle permet également une récupération des calories pour optimiser le bilan énergétique du traitement.

Encore selon l'invention, l'installation de traitement comprend des contenants dans lesquels sont conditionnés les produits, lesquels contenants comprennent une face de dessous, et éventuellement une face de dessus, munies d'une pluralité de perforations pour permettre le ruissellement du liquide de traitement sur les produits à traiter, au sein desdits contenants, puis leur évacuation.

Selon une première possibilité, les moyens de convoyage des produits consistent en un tapis unique sans fin ; les produits peuvent alors être disposés sur ce tapis soit en vrac, soit indirectement dans les contenants de conditionnement précités. Dans une variante de réalisation, les moyens de convoyage peuvent consister en un système de chaînes convoyeuses, particulièrement adaptées pour les contenants précités, lesquels contenants sont alors équipés de moyens adaptés pour leur solidarisation audit système de chaînes.
Selon une forme particulière de réalisation, ledit système de chaînes convoyeuses est agencé de sorte à former une superposition de brins, les contenants poursuivant alors un cheminement en forme d'aller-retour sur plusieurs niveaux au sein de l'installation.

L'installation de traitement qui vient d'être décrite, peut être aménagée de sorte à permettre la mise en oeuvre de tout type d'opération de traitement des produits de la mer par aspersion d'un ou de plusieurs liquides de traitement.

Selon une première forme de réalisation, l'installation est adaptée pour assurer la déstructuration d'un bloc de produits de la mer congelés, et elle comprend à cet effet au moins :
- un poste de traitement par aspersion d'au moins un liquide de traitement approprié pour déstructurer ledit bloc de produits de la mer, tout en maintenant lesdits produits dans un état congelé, et
- un poste de traitement par aspersion d'au moins un liquide de traitement approprié pour amener lesdits produits congelés individualisés à une température optimale en vue de leur conservation.

Selon une autre forme de réalisation, l'installation est adaptée pour assurer simplement la décongélation de produits de la mer congelés, et elle comprend alors au moins un poste de décongélation desdits produits par aspersion d'au moins un liquide de traitement approprié.

Selon encore une autre forme particulière de réalisation, l'installation de traitement est adaptée pour assurer la cuisson de produits de la mer congelés ; cette installation comprend alors au moins :
- un poste de décongélation par aspersion d'au moins un liquide de traitement approprié sur les produits congelés,
- un poste de cuisson par aspersion d'au moins un liquide de traitement approprié sur les produits décongelés, et
- un poste de simple refroidissement ou de recongélation par aspersion d'au moins un liquide de traitement à une température appropriée sur les produits cuits.

Encore selon une forme particulière de réalisation, et toujours pour assurer la cuisson de produits de la mer, l'installation comprend au moins :
- un poste de cuisson par aspersion d'au moins un liquide de traitement approprié sur les produits, et
- un poste de simple refroidissement ou de congélation par aspersion d'au moins un liquide de traitement approprié sur les produits de la mer cuits.
Cette forme particulière d'installation peut également être employée pour la préparation de produits de la mer initialement dans un état congelé.

Selon encore une autre forme de réalisation possible, l'installation comporte au moins un poste de congélation par aspersion d'au moins un liquide de traitement approprié. Ce poste de congélation peut éventuellement être associé à un poste de maintien en température ou de refroidissement, de type aérofrigorifère ou frigorifère statique, servant également de zone d'égouttage des produits.
De préférence, le poste de congélation, et éventuellement le poste d'égouttage/refroidissement, sont intégrés dans au moins une enceinte isolée, équipées de ventilateurs pour homogénéiser la température de l'air ambiant.

Juste après le traitement de congélation, les produits peuvent être soumis à un traitement par eau pour assurer leur enrobage par une fine pellicule de glace, de manière à les protéger contre la déshydratation et contre les attaques liées au stockage ultérieur à température négative. Ce traitement particulier, qui entraîne une remontée de la température des produits, est avantageusement suivi d'une phase de remise à température, dans une enceinte de surgélation à air classique, par exemple.

Toujours selon l'invention, les installations de traitement précitées peuvent comporter en outre au moins un poste de traitement complémentaire par un liquide contenant un produit anti-oxydant, de type métabisulfite par exemple. Ce poste de traitement par produit anti-oxydant peut être disposé à tout endroit approprié.

Toujours selon l'invention, une installation comportant une pluralité de postes de traitement successifs peut être utilisée par l'opérateur pour la mise en oeuvre d'un ou de plusieurs types de traitement ; au moins deux desdits postes de traitement successifs peuvent alors être utilisés pour appliquer le même traitement de manière à augmenter la capacité de l'installation.

Mais l'invention sera encore illustrée, sans aucunement être limitée, par la description suivante de différents modes de réalisation particuliers, donnés uniquement à titre indicatif, et représentés sur les dessins annexés suivants dans lesquels :
- la figure 1 est une représentation schématique en perspective d'une installation de traitement conforme à l'invention, comprenant un poste de traitement muni du moyen d'application du liquide de traitement par aspersion ;
- la figure 2 est une représentation schématique d'une installation de traitement conforme à l'invention, adaptée pour assurer la déstructuration de blocs de produits de la mer congelés ;
- la figure 3 est encore une représentation schématique d'une installation de traitement conforme à l'invention, adaptée ici pour la cuisson de produits de la mer congelés ;
- la figure 4 est une représentation en perspective d'une installation de congélation conforme à l'invention, laquelle installation comporte un poste de congélation par aspersion de liquide de traitement et un poste de refroidissement de type aérofrigorifère ;
- la figure 5 est une représentation en perspective d'une autre forme de réalisation d'une installation de congélation conforme à l'invention, dont le moyen de convoyage consiste ici en un système de chaînes convoyeuses.

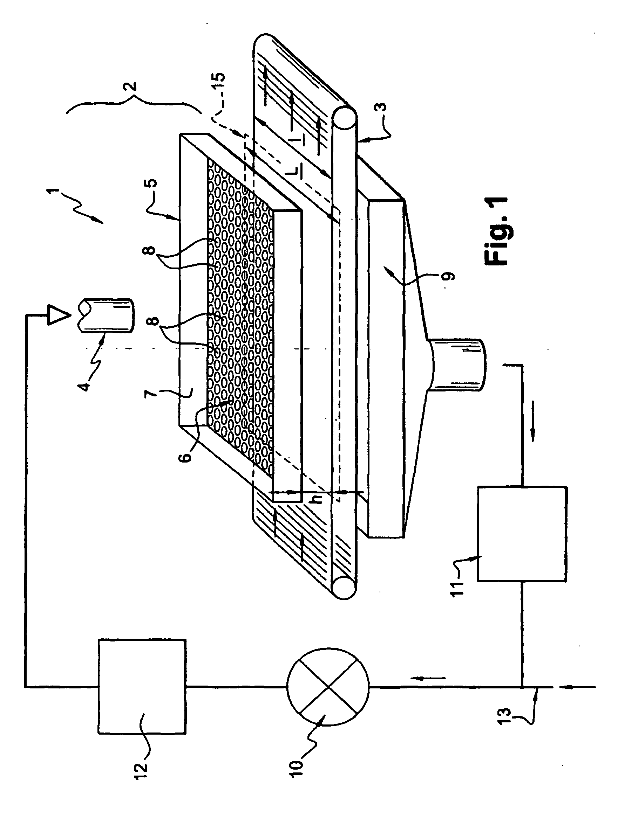

L'installation de traitement de produits de la mer, représentée schématiquement sur la figure 1, comprend - un poste de traitement 1 muni de moyens 2 d'application d'un liquide de traitement sur les produits (les produits à traiter n'ont pas été représentés), et - un moyen de convoyage 3 des produits, ici représenté sous la forme d'un tapis sans fin.
Bien entendu, tout autre moyen de convoyage 3 approprié peut être envisagé pour un transport direct « en vrac », ou indirect notamment par l'intermédiaire de contenants adaptés munis de perforations.

Les moyens 2 d'application du liquide de traitement sont constitués de moyens 4 assurant l'alimentation en liquide d'une structure d'aspersion 5, ici en forme de cuvette d'arrosage qui s'étend au-dessus du tapis sans fin 3.
La cuvette d'arrosage 5 correspondante est principalement constituée d'un élément de fond 6 délimité par une ceinture de parois 7 ; cet élément de fond 6 forme une surface horizontale ou sensiblement horizontale, et il est muni d'une pluralité de perforations 8 uniformément ou sensiblement uniformément réparties sur toute sa surface.

On remarque encore sur la figure 1, la présence d'un organe 9 de récupération des liquides de traitement, disposé sous le tapis sans fin 3.
Le liquide récupéré circule jusqu'aux moyens d'apport en liquide de traitement 4 par un système de pompage 10, au travers d'un système de filtration 11 et d'un dispositif 12 de contrôle et de gestion de la température.
En outre, une arrivée 13 en liquide de traitement est aménagée en vue d'assurer un appoint permanent de ce liquide au sein de l'installation.

Lors de la mise en oeuvre du poste de traitement 1, le liquide de traitement s'écoule dans la cuvette d'arrosage 5 à partir du système ou moyen d'alimentation 4 ; le liquide de traitement forme alors une couche uniforme sur toute la surface supérieure de l'élément de fond 6 de la cuvette d'arrosage 5.
Les perforations 8 de l'élément de fond 6 assurent la distribution du liquide de traitement sous forme d'aspersion sur les produits à traiter qui sont acheminés par le tapis sans fin 3 ; la surface horizontale ou sensiblement horizontale occupée par les perforations 8 délimite la surface de traitement 15 des produits.
De préférence, les dimensions de l'élément de fond 6 de la cuvette d'arrosage 5 sont adaptées de telle sorte que la largeur L de la surface de traitement 15 soit légèrement supérieure à la largeur I du moyen de convoyage 3, pour assurer un traitement optimal et efficace de l'ensemble des produits transportés ; en outre, la longueur de la cuvette 5 est adaptée, en particulier en fonction de la vitesse des moyens de convoyage 3, selon la durée de traitement souhaitée.

Le liquide de traitement entre en contact avec les produits à traiter, enrobe ces derniers par ruissellement, puis s'écoule par simple gravité dans l'organe de récupération 9. Le liquide récupéré, recyclé par le système de pompage 10, via les moyens de filtration 11 et les moyens de gestion de température 12, réalimente les moyens d'apport 4, à titre principal ou de manière complémentaire.
Le recyclage correspondant permet de limiter le volume de liquide de traitement employé pour la transformation des produits d'intérêt à son strict minimum, ce qui permet également de limiter les pollutions lors de l'évacuation du liquide de traitement à l'égout ; de plus, ce recyclage permet d'optimiser le rendement énergétique de l'installation.

Les moyens de convoyage 3 sont bien entendu adaptés pour permettre l'écoulement des liquides dans l'organe de récupération 9 ; par exemple, le tapis sans fin utilisé peut être du type à barrettes ajourées.

On remarque encore, figure 1, la relativement faible distance h entre la structure d'aspersion 5, et le moyen de convoyage 3 des produits ; en l'espèce, la distance h entre l'élément de fond 6 de la cuvette d'arrosage 5 et le brin supérieur du tapis sans fin 3 est de préférence de l'ordre de 25 cm au maximum.
Comme déjà expliqué, une distance h minimale limite l'impact du liquide de traitement sur les produits à traiter, ce qui en particulier diminue les risques de détériorations de ces derniers.

L'installation décrite ci-dessus, en relation avec la figure 1, peut être mise en oeuvre pour tout type d'opération de traitement de produits de la mer, genre crustacés (crevettes, langoustines ...), voire même de poissons, par un liquide approprié (eau, saumure ... éventuellement complétée par des additifs de type antioxydant, de type substance d'enrobage comme le sorbitol, de type anti-bactérien, ou autre ...), notamment pour assurer leur congélation, cuisson, refroidissement, etc....
Cette installation peut comporter plusieurs postes de traitement identiques ou similaires juxtaposés, et il peut être envisagé de l'utiliser pour différentes opérations (par exemple cuisson, congélation ...), et cela en fonction des besoins de l'opérateur. Le ou les liquides de traitement utilisés, et leur température positive ou négative, seront fonctions du ou des traitements à appliquer auxdits produits.

En complément du traitement des produits par le froid ou par la chaleur, cette installation peut être mise en oeuvre pour l'application de tout autre liquide de traitement, par exemple un liquide contenant des produits antioxydants (métabisulfite ...) qui sont connus de l'homme du métier pour leur action dans la prévention de la mélanose.

Les figures suivantes 2 à 5 présentent des formes particulières de réalisation d'installations de traitement conformes à l'invention. Pour faciliter la description de ces différentes installations, les éléments structurels identiques à ceux décrits en relation avec la figure 1 conserveront les mêmes repères.

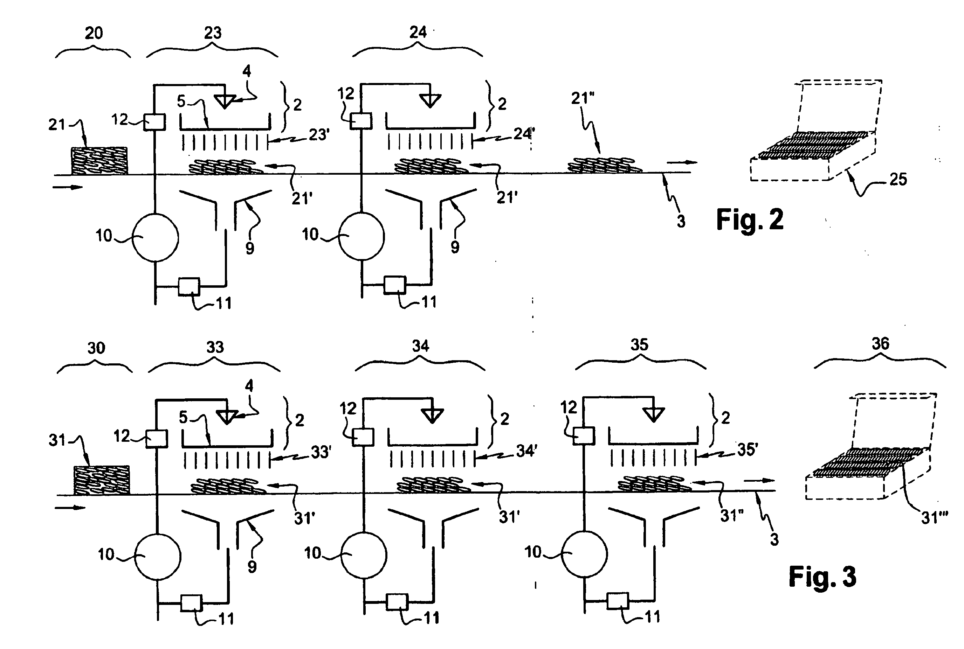

Une première installation adaptée pour assurer la déstructuration de blocs de produits de la mer congelés est représentée sur la figure 2.
L'installation de déstructuration correspondante comprend un poste de chargement 20 où des blocs de produits de la mer congelés 21, ici de type crevettes congelées, sont acheminés par tout moyen approprié.
Les produits 21 arrivent au poste de chargement 20, sous forme de blocs parallélépipédiques, comprenant essentiellement des crevettes et une certaine quantité de glace, selon le procédé de congélation utilisé.

Les blocs congelés correspondants 21 sont déplacés, par le moyen de convoyage 3, vers un premier poste 23 où ils sont arrosés par un premier fluide de traitement 23' approprié, pour individualiser lesdits produits tout en les maintenant dans un état congelé.
Ce poste 23 est similaire à celui décrit en relation avec la figure 1 ; il comporte principalement un moyen d'application 2 du liquide 23', constitué d'un moyen d'alimentation en liquide 4 et d'une cuvette d'arrosage 5. Après passage sur les produits 21, le liquide 23' correspondant est évacué vers une structure de récupération 9, laquelle structure est reliée aux moyens d'aspersion 2 par un système de pompage 10, au travers d'un système de filtration 11 et d'un dispositif de gestion de température 12.
Le liquide de traitement 23' consiste par exemple en une saumure (solution de NaCl intégrant éventuellement des ingrédients complémentaires type sorbitol ou autres) à environ - 5°C ; cette saumure 23' permet la fonte de la glace entourant les produits en vue d'assurer leur individualisation, tout en maintenant lesdits produits dans un état congelé. L'application de la saumure à - 5°C peut être soumise aux produits pendant une durée de l'ordre de 2 à 5 minutes.

A la suite de ce premier poste de traitement 23, on trouve un second poste de traitement 24 lui aussi similaire à celui décrit précédemment en relation avec la figure 1. Le poste 24 correspondant permet ici l'arrosage des produits individualisés 21' par un second fluide de traitement 24', approprié pour abaisser la température des produits en vue d'optimiser leur conservation.
Ce fluide de traitement 24' est de préférence une saumure à environ - 20°C ; l'arrosage correspondant peut durer environ 3 mn.

Suite à ces deux opérations de traitement, les crevettes 21" se présentent sous forme congelée et individualisée. Elles peuvent alors facilement être conditionnées dans des emballages 25 adaptés pour leur présentation à la vente, leur stockage et/ou leur transport.

L'opération de déstructuration mise en oeuvre par cette installation offre la possibilité d'individualiser des produits, et notamment des produits de la mer, initialement congelés sous forme de blocs, ceci sans interruption de la chaîne du froid ; cette installation est alors réellement intéressante en terme de sécurité alimentaire.
Le procédé de traitement mis en oeuvre par cette installation n'entraîne aucune détérioration des produits lors de leur individualisation.

La figure 3 est une représentation schématique d'une autre installation de traitement conforme à l'invention, ici adaptée pour la cuisson de produits de la mer congelés.

Tout d'abord, l'installation correspondante comprend un poste de chargement 30 où des blocs de produits congelés 31 (par exemple des crevettes) sont positionnés, comme décrit précédemment en relation avec la figure 2.

Les blocs congelés 31 correspondants sont déplacés par le moyen de convoyage 3 vers un premier poste de traitement 33 où ils sont arrosés avec un liquide de traitement 33' approprié en vue de leur déstructuration et décongélation. Ce poste de décongélation 33 est similaire à celui décrit précédemment en relation avec le figure 1 ; il comporte principalement un moyen d'application 2 du liquide de traitement, comprenant un moyen d'apport en liquide 4 et une cuvette d'arrosage 5, un organe de récupération 9, et un système de recyclage comprenant une pompe 10, un filtre 11 et un moyen de gestion de la température 12.

Le liquide de traitement 33' consiste, par exemple, en de l'eau dont la température est comprise entre 25°C et 60°C ; la mise en oeuvre du traitement par le moyen d'application 2 du poste 33 permet une décongélation et individualisation efficaces et homogènes des produits 31'.

Selon une alternative non représentée de ce poste 33, il est possible de juxtaposer deux ou trois moyens d'application 2, chacun desdits moyens 2 assurant l'aspersion d'un liquide de traitement à température dégressive, en fonction notamment de la teneur en glace des pains de crevettes.

Le poste de décongélation 33 est suivi d'un poste de cuisson 34 où les crevettes décongelées 31' sont traitées avec un liquide 34' à une température appropriée. Ce poste 34 est également similaire à celui décrit précédemment en relation avec la figure 1 ; il permet un arrosage homogène des produits 31' par le liquide de traitement 34', par exemple une eau ou une saumure chauffée à une température proche de l'ébullition (98°C). On notera que ce liquide de cuisson peut éventuellement être complété par des additifs, par exemple aromatiques, aptes à parfaire l'opération correspondante.

Après la cuisson, les produits 31" sont congelés, ou éventuellement simplement refroidis, au niveau d'un poste 35 de congélation ou de refroidissement selon le cas. Cette congélation ou ce refroidissement est réalisé par arrosage d'un liquide de traitement 35' à température appropriée, toujours au moyen d'une structure d'aspersion conforme à celle représentée sur la figure 1.
Pour une congélation, le liquide de traitement 35' peut être une saumure à une température de l'ordre de - 20°C. Dans le cas où le poste 35 est du type poste de refroidissement, la température de la saumure 35' peut être comprise entre - 5 et - 15°C en fonction du temps d'exposition.
On notera que le liquide de traitement 35' peut contenir tout additif approprié, par exemple un antioxydant (métabisulfite ...), une substance d'enrobage (sorbitol ...) ou encore un produit anti-bactérien (GDL ...), éventuellement en association.

Pour finir, les produits congelés 31"' sont évacués vers un poste de conditionnement 36 en vue de leur répartition dans des emballages appropriés pour leur présentation à la vente, ou encore pour leur stockage et/ou leur transport.

On notera encore que l'installation peut comporter en outre un ou plusieurs postes de lavage des produits par eau, par exemple juste après la cuisson, ceci au moyen d'un équipement tel que décrit figure 1, ou par pulvérisation.

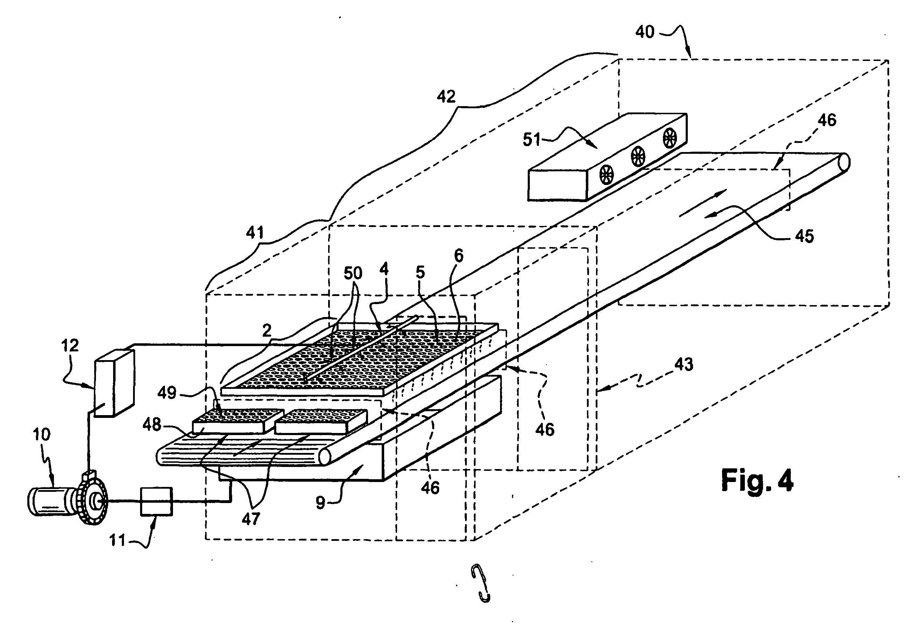

La figure 4 illustre encore une autre installation de traitement conforme à la présente invention, adaptée pour la congélation de produits de la mer.
L'installation de congélation correspondante est constituée d'une cabine isotherme 40 comprenant un poste de congélation par aspersion 41 et un poste 42 d'égouttage sous refroidissement ; les postes 41 et 42 sont séparés par une cloison 43 appropriée.

Le moyen de convoyage 45 des produits est ici constitué d'un tapis sans fin unique, de type ajouré, s'étendant sur toute la longueur de la cabine isotherme 40, de sorte à traverser la cloison intermédiaire 43 au niveau d'une ouverture 46 munie d'un rideaux à lanières ; le tapis sans fin 45 se prolonge encore sur une courte distance au-delà de chacune des extrémités de ladite cabine isotherme 40, en passant également à travers des ouvertures 46 équipées de rideaux à lanières. Les ouvertures 46 précitées sont adaptées pour permettre le passage des produits à traiter, tout en limitant les échanges thermiques.
A titre seulement indicatif, ce tapis sans fin unique 45 peut consister en un tapis à mailles, un tapis à lattes transversales ou à barrettes. On peut utiliser toute structure de tapis présentant une perméabilité suffisante aux liquides de traitement, tout en offrant un support efficace pour les produits à traiter disposés « en vrac », ou pour des contenants destinés à contenir ces produits.

En l'occurrence, on remarque, sur la figure 4, que le tapis sans fin 45 est adapté pour transporter deux contenants 47 disposés l'un à côté de l'autre. Les contenants 47 correspondants sont constitués d'un réceptacle 48 en forme de bac, permettant la réception des produits à traiter, et d'un organe amovible en forme de couvercle 49 permettant d'obturer ledit réceptacle 48 ; la face de dessous du contenant 47, c'est-à-dire l'élément de fond dudit réceptacle 48 (non visible) et la face de dessus dudit contenant 47, c'est-à-dire l'organe de couvercle 49, sont chacun munis d'une pluralité d'orifices ou de perforations, uniformément ou sensiblement uniformément répartis.
L'ensemble de ces perforations permet le ruissellement du liquide de traitement au sein desdits contenants 47, sur les produits à traiter, lors de la mise en oeuvre du poste de traitement tel que décrit ci-dessous.

Le poste de traitement 41 comporte un moyen d'application du liquide de traitement conforme à celui décrit précédemment en relation avec la figure 1.
Plus précisément, on retrouve au niveau du poste 41 une structure d'aspersion 2 du liquide de traitement, et un organe de récupération 9 relié à ladite structure d'aspersion 2 par un système de pompage 10, ceci au travers d'un système de filtration 11 et d'un dispositif échangeur-refroidisseur 12.
Le liquide de traitement utilisé peut être une saumure dont la température est adaptée pour assurer la congélation des produits.
Le moyen 2 d'application du liquide de traitement est constitué du moyen d'apport en liquide 4, ici sous la forme d'une rampe d'alimentation, et d'une cuvette d'aspersion ou d'arrosage 5.
La rampe d'alimentation 4 précitée présente une conformation générale tubulaire, dont le tronçon qui s'étend au-dessus de la cuvette d'arrosage 5 est muni d'une pluralité de perforations 50, assurant une répartition efficace du liquide de traitement dans ladite cuvette 5.

D'autre part, le poste d'égouttage 42 est adapté pour la collecte des liquides de traitement s'égouttant des contenants 47 ; il peut être muni pour cela d'un organe de récupération similaire à celui du poste de traitement 41 précité.
On remarque encore, au niveau du poste d'égouttage 42, la présence d'un dispositif aérofrigorifère 51 qui permet un contrôle de la température ambiante, et la ventilation de l'atmosphère pour homogénéiser cette température au sein du poste équipé ; de préférence, la température est maintenue entre - 18°C et - 20°C.

Lors de la mise en oeuvre de cette installation par l'opérateur, la pompe 10 est mise en fonctionnement ; le liquide de traitement circule au sein de l'échangeur-refroidisseur 12 de sorte à atteindre une température négative appropriée pour la congélation des produits.
Ce liquide parvient au niveau de la rampe d'alimentation 4, pour s'écouler par les orifices 50 sur l'élément de fond 6 de la cuvette d'aspersion 5. Le débit à la sortie de la rampe 4 est adapté de manière à obtenir une couche de liquide de traitement sur la surface supérieure de l'élément de fond 6, et ainsi permettre un écoulement homogène par simple gravité à travers l'ensemble des orifices 8.
La surface de l'élément de fond 6 de la cuvette d'aspersion 5 délimite la surface de traitement des produits, tel que décrit précédemment en relation avec la figure 1.

Selon la représentation de la figure 4, les contenants 47, dans lesquels sont placés les produits à traiter, sont convoyés par le tapis sans fin 45 de l'avant vers l'arrière du dessin.
Lors du passage des contenants 47 dans la surface de traitement, à savoir sous la cuvette d'arrosage 5, le liquide de traitement va ruisseler de la surface supérieure à la surface inférieure de ces contenants 47 de sorte à congeler les produits.
Le liquide de traitement s'égoutte ensuite à travers les deux brins (supérieur et inférieur) du tapis sans fin unique 45, pour être enfin récupéré dans la cuvette de réception 9.
Les contenants 47 sont ensuite déplacés dans le poste d'égouttage 42, où les liquides de traitement continuent de s'égoutter ; le dispositif aérofrigorifère 51 permet le maintien, voire une diminution, de la température intrinsèque des produits, de sorte à être comprise dans un domaine de l'ordre de - 18°C à - 20°C à la sortie de l'installation.

Les contenants 47 sortent du poste de refroidissement 42 par l'ouverture 46 aménagée dans la paroi d'extrémité arrière de la cabine isotherme 40. Les produits disposés préalablement dans les contenants 47 se présentent alors sous la forme de blocs congelés parallélépipédiques.

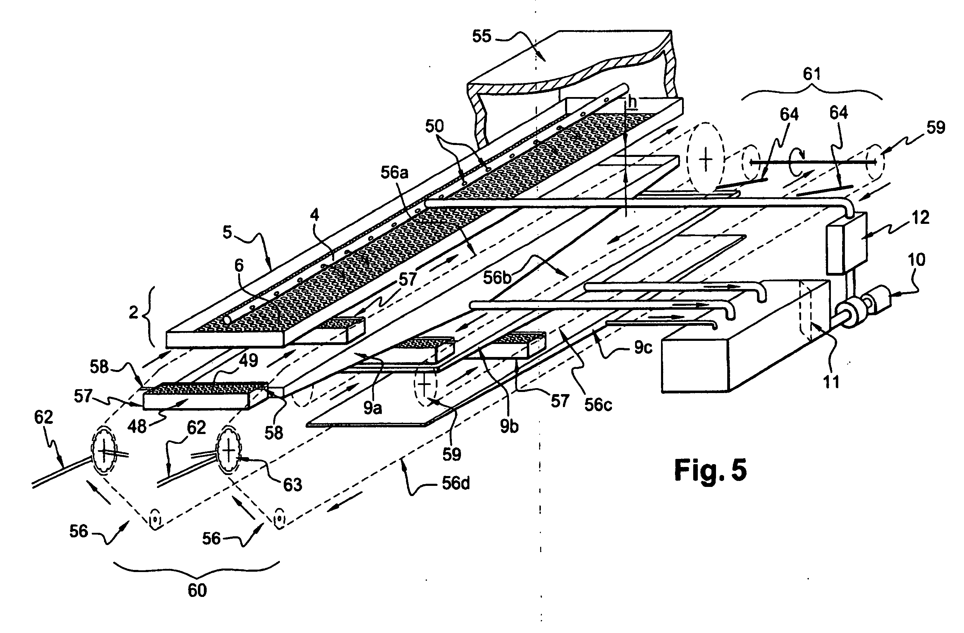

La figure 5 représente encore une autre forme de réalisation possible d'une installation de congélation conforme à l'invention. L'installation correspondante comporte une enceinte externe isothermique 55 et un dispositif aérofrigorifère ou frigorifère classique (non représenté) de sorte à maintenir une température ambiante négative, par exemple comprise entre - 18°C et - 20°C. La présente installation comporte encore un poste de traitement sensiblement similaire à celui décrit précédemment en relation avec la figure 1. Ce poste de traitement est donc constitué d'un moyen 2 d'application du liquide de traitement, de moyens de récupération 9 de ce liquide reliés audit moyen d'application 2 par un système de pompage 10 au travers d'un système de filtration 11 et d'un moyen de gestion de température 12 ; les produits sont chargés dans des contenants 57 et déplacés au moyen d'un système de chaînes convoyeuses 56.

Le système de chaînes convoyeuses 56 est constitué de deux chaînes latérales qui sont conformées pour supporter et convoyer les contenants 57 précités.
Les contenants 57 sont similaires à ceux décrits précédemment en relation avec la figure 4. Ils sont constitués d'un réceptacle 48 associé à un organe amovible en forme de couvercle 49, et ils sont munis d'une face supérieure et d'une face inférieure ajourées, perméables à l'écoulement du liquide de traitement. Ces contenants 57 comportent en outre deux tiges latérales 58 adaptées pour venir s'accrocher sur les chaînes de transport 56.

Ces chaînes convoyeuses 56 coopèrent avec un ensemble de roues 59 aménagées de sorte que lesdites chaînes 56 soient agencées pour former une superposition de brins 56a, 56b, 56c et 56d ; les contenants 57 poursuivent alors un cheminement en forme d'aller-retour sur plusieurs niveaux, ce qui permet de limiter l'encombrement horizontal de l'installation.

On remarque, encore sur la figure 5, entre les différents brins de chaînes, la présence de trois organes de récupération superposés 9a, 9b, 9c, légèrement décalés horizontalement les uns par rapport aux autres.
Plus précisément, le brin supérieur 56a est disposé entre l'élément de fond 6 de la cuvette d'aspersion 5 et l'organe de récupération supérieur 9a ; ce brin supérieur 56a est de préférence à une distance h comprise entre 10 et 25 cm par rapport à l'élément de fond 6 de la cuvette d'aspersion 5. En outre, le brin 56b est disposé au-dessus de l'organe intermédiaire 9b ; le brin 56c circule au-dessus de l'organe inférieur 56c ; pour finir, le brin inférieur 56d circule sous l'organe inférieur 9c.

On remarque encore une zone d'introduction 60 et une zone de sortie 61 adaptées respectivement pour le positionnement des contenants 57 sur les chaînes convoyeuses 56, et pour leur enlèvement.
La zone d'introduction 60, au niveau du brin 56a, est principalement constituée de deux guides d'entrée 62, en forme de glissières, s'étendant jusqu'à des roues d'indexation 63 assurant l'écartement des chaînes convoyeuses 56 en vue du positionnement des tiges d'extrémités 58 des contenants 57.
La zone de dégagement 61, au niveau de brin 56c, comprend deux guides de sortie 64, également en forme de glissières, assurant également l'écartement des chaînes 56 pour permettre la désolidarisation des tiges 58 des contenants 57.
Le positionnement des contenants sur le système de convoyage, et leur enlèvement, sont réalisés par exemple manuellement.

Lors de la mise en oeuvre de cette installation par l'opérateur, les contenants 57 sont introduits et solidarisés aux chaînes convoyeuses 56, au niveau de la zone d'introduction 60 précitée.
Les contenants 57 sont convoyés sur le brin 56a de l'avant vers l'arrière du dessin, conformément à la représentation de la figure 5 ; ces contenants 57 cheminent alors au niveau de la surface de traitement délimitée par l'élément de fond 6 de la cuvette d'arrosage 5.
A la sortie de la surface de traitement, les produits placés dans les contenants 57 sont dans un état congelé, sous forme de blocs ou de pains parallélépipédiques.

Les contenants 57 vont alors ensuite circuler successivement au niveau des brins 56b et 56c, respectivement au-dessus des organes de récupération 9b et 9c, pour assurer la récupération des liquides de traitement continuant de s'égoutter desdits contenants 57, ceci dans une ambiance froide ventilée.

A l'extrémité du brin 56c, les guides de sortie 64 de la zone de dégagement 61 permettent la désolidarisation des contenants 57 par rapport aux chaînes convoyeuses 56. Ces contenants 57 contiennent chacun un bloc de produits congelés ; ce bloc peut être extrait du contenant 57 en vue par exemple de son conditionnement dans un emballage approprié pour son transport, son stockage et/ou sa présentation à la vente.

Comme décrit précédemment, le décalage horizontal entre les différents organes de récupération 9a, 9b et 9c permet de récupérer l'ensemble des liquides de traitement, aussi bien dans la surface de traitement que sur le reste du cheminement du contenant 57 au sein de l'installation, ce contenant 57 étant constamment à la verticale d'un organe de récupération 9.

On notera que les installations de congélation conformes à l'invention, comme décrit par exemple ci-dessus en relation avec les figures 4 et 5, permettent une congélation rapide et efficace des produits traités. Ces installations permettent en particulier d'amener la température à coeur des produits à - 20°C en moins de 6 à 8 minutes selon la taille des produits, ce qui garantit une bonne qualité de congélation.

Il peut être envisagé d'utiliser tout autre contenant approprié pour les installations de traitement conformes à l'invention, autre que ceux décrits précédemment.
On peut par exemple envisager une structure support ajourée, et adaptée pour recevoir une pluralité de barquettes également ajourées, dans lesquelles sont placés les produits de la mer à traiter.
Il peut également être envisagé de superposer une pluralité de barquettes ajourées ; le liquide de traitement circule alors par simple gravité de la barquette en position supérieure à la barquette servant d'embase à la superposition.

Dans une variante de réalisation, le poste de congélation est directement suivi d'un poste qui permet d'enrober les produits d'une fine pellicule de glace (appelé poste de « glazurage »), lui-même suivi d'un poste de surgélation par air.
Le poste de congélation en question est un poste par aspersion conforme à celui décrit en liaison avec la figure 1 ; il met en oeuvre par exemple une saumure qui permet de porter les produits à une température de l'ordre de - 18°C à - 21°C.
Le poste suivant, dit de « glazurage », soumet les produits à un traitement par eau froide adapté pour assurer leur enrobage par une fine pellicule de glace (l'eau se transformant en glace au contact du produit). La pellicule de glace formée assure la protection des produits contre la déshydratation et contre les attaques dues au stockage ultérieur à température négative.

Cette opération d'enrobage conduisant à une élévation de la température des produits, elle est avantageusement suivie d'une phase de remise à température (aux alentours de - 18°C à - 25°C à coeur), par exemple dans une cellule de surgélation à air, classique.

Dans tous les cas, les installations de traitement conformes à l'invention sont destinées à la mise en oeuvre d'opérations de traitement particulières, prédéfinies par l'opérateur.
Cependant, il peut tout-à-fait être envisagé de concevoir des installations polyvalentes permettant une mise à température du liquide de traitement à façon, selon les besoins de l'opérateur, et permettant aussi de modifier le liquide de traitement employé au niveau de chacun des postes.
Cette particularité autorise l'utilisation de différents postes successifs pour appliquer une même opération de traitement aux produits, par exemple une congélation ou une cuisson, ce qui permet d'augmenter la capacité de traitement de l'installation, notamment par l'augmentation de la vitesse de cheminement des produits, définie par le moyen de convoyage.

On notera que dans tous les cas, des postes spécifiques peuvent être prévus, avant, après ou entre les différents postes décrits, pour traiter les produits par un agent antioxydant (métabisulfite par exemple), ou autre.

De préférence encore, les moyens de convoyage des produits (tapis sans fin, chaînes convoyeuses ...) seront prévus à vitesse variable pour permettre d'adapter à volonté la vitesse de cheminement des produits traités.

## Revendications

1. Installation de traitement de produits de la mer, en particulier de crustacés type crevettes ou langoustines, par au moins un liquide de traitement approprié, laquelle installation comprend :
- au moins un poste de traitement (1) muni de moyens d'application (2) dudit liquide de traitement sur lesdits produits de la mer, et
- des moyens de convoyage (3, 45, 56) desdits produits, pour assurer leur transport via notamment ledit ou lesdits postes de traitement,
**caractérisée en ce que** les moyens d'application (2) du liquide de traitement sont constitués de moyens d'apport (4) en liquide de traitement dans une cuvette d'arrosage (5),
laquelle cuvette d'arrosage (5) est formée d'un élément de fond (6) délimité par une ceinture de parois (7), lequel élément de fond (6) forme une surface horizontale ou sensiblement horizontale s'étendant au-dessus desdits moyens de convoyage (3, 45, 56), et est muni d'une pluralité de perforations (8) permettant la distribution dudit liquide de traitement sous forme d'aspersion, lesquelles perforations (8) occupent une surface horizontale ou sensiblement horizontale délimitant la surface de traitement (15) desdits produits, et
lesquels moyens (4) d'apport en liquide de traitement consistent en une rampe d'alimentation de forme générale tubulaire, dont le tronçon qui s'étend au-dessus de la cuvette d'arrosage (5) est muni d'une pluralité d'orifices (50), assurant une répartition du liquide de traitement dans ladite cuvette d'arrosage (5).

2. Installation selon la revendication 1, **caractérisée en ce que** la distance h entre la structure d'aspersion (2) et le support de convoyage (3, 45, 56) des produits à traiter est de 25 cm au maximum.

3. Installation selon l'une quelconque des revendications 1 ou 2, **caractérisée en ce qu'**elle comporte en outre des moyens (9) de récupération des liquides de traitement s'étendant au moins sous la surface de traitement (15), et sous les moyens de convoyage(3, 45, 56) des produits à traiter.

4. Installation selon la revendication 3, **caractérisée en ce que** les moyens (9) qui assurent la récupération des liquides de traitement sont reliés à la structure (2) d'aspersion en liquide de traitement par un système de pompage (10) assurant le recyclage desdits liquides, le recyclage en question étant réalisé au travers d'un système de filtration (11) et étant associé à un moyen (12) de contrôle et de gestion de la température desdits liquides.

5. Installation selon l'une quelconque des revendications 1 à 4, **caractérisée en ce qu'**elle comprend des contenants (47, 57) de conditionnement des produits, lesquels contenants (47, 57) comprennent une face de dessous, et éventuellement une face de dessus, munie(s) d'une pluralité de perforations pour permettre le ruissellement du liquide de traitement sur les produits à traiter chargés au sein desdits contenants (47, 57), puis son évacuation.

6. Installation selon l'une quelconque des revendications 1 à 5, **caractérisée en ce que** les moyens de convoyage (56) desdits contenants de conditionnement (57) consistent en un système de chaînes convoyeuses, lesquels contenants (57) sont équipés de moyens (58) adaptés pour leur solidarisation audit système de chaînes (56).

7. Installation selon la revendication 6, **caractérisée en ce que** le système de chaînes convoyeuses (56) est agencé de sorte à former une superposition de brins (56a, 56b, 56c, 56d), les contenants (57) poursuivant un cheminement en forme d'aller-retour sur plusieurs niveaux.

8. Installation selon l'une quelconque des revendications 1 à 5, **caractérisée en ce que** les moyens de convoyage des produits sont constitués d'un tapis sans fin unique (3, 45).

9. Installation selon l'une quelconque des revendications 1 à 8, **caractérisée en ce qu'**elle est adaptée pour assurer la déstructuration d'un bloc (21) de produits de la mer congelés, laquelle installation comprend au moins :
- un poste de traitement (23) par aspersion d'au moins un liquide de traitement (23') approprié pour déstructurer ledit bloc (21) de produits de la mer, tout en maintenant lesdits produits dans un état congelé, et
- un poste de traitement (24) par aspersion d'au moins un liquide de traitement (24') approprié pour amener lesdits produits congelés individualisés (21') à une température optimale en vue de leur conservation.

10. Installation selon l'une quelconque des revendications 1 à 8, **caractérisée en ce qu'**elle est adaptée pour assurer la décongélation de produits de la mer congelés, laquelle installation comprend au moins un poste de décongélation desdits produits par aspersion d'au moins un liquide de traitement approprié.

11. Installation selon l'une quelconque des revendications 1 à 8, **caractérisée en ce qu'**elle est adaptée pour assurer la cuisson de produits de la mer congelés, laquelle installation comprend au moins :
- un poste de décongélation (33) par aspersion d'au moins un liquide de traitement (33') approprié sur les produits congelés (31),
- un poste de cuisson (34) par aspersion d'au moins un liquide de traitement (34') approprié sur les produits décongelés (31'), et
- un poste de simple refroidissement ou de recongélation (35) par aspersion d'au moins un liquide de traitement (35') à température appropriée sur les produits cuits (31").

12. Installation selon l'une quelconque des revendications 1 à 8, **caractérisée en ce qu'**elle est adaptée pour assurer la cuisson de produits de la mer, laquelle installation comprend au moins :
- un poste de cuisson par aspersion d'au moins un liquide de traitement approprié sur les produits, et
- un poste de simple refroidissement ou de congélation par aspersion d'au moins un liquide de traitement approprié sur les produits de la mer cuits.

13. Installation selon l'une quelconque des revendications 1 à 8, **caractérisée en ce qu'**elle comporte au moins un poste de congélation par aspersion d'au moins un liquide de traitement approprié.

14. Installation selon la revendication 13, **caractérisée en ce qu'**elle comporte en outre une zone d'égouttage sous refroidissement (42).

15. Installation selon l'une quelconque des revendications 13 ou 14, **caractérisée en ce qu'**elle est intégrée dans une enceinte isolée (40, 55), équipée de systèmes ventilateurs (51) permettant d'homogénéiser la température de l'air ambiant.

16. Installation selon la revendication 15, **caractérisée en ce qu'**elle comporte, juste en aval du poste de congélation, au moins un poste assurant l'enrobage des produits par une fine pellicule de glace, lequel poste d'enrobage est suivi d'un poste de surgélation par air assurant une remise des produits à leur température de conservation.

17. Installation selon l'une quelconque des revendications 9 à 16, **caractérisée en ce qu'**elle comporte au moins un poste de traitement complémentaire par un liquide contenant un produit antioxydant, type métabisulfite par exemple.

18. Installation selon l'une quelconque des revendications 9 à 17, **caractérisée en ce qu'**elle comprend une pluralité de postes de traitement successifs utilisés selon le ou les types de traitement mis en oeuvre, au moins deux postes de traitement successifs pouvant être utilisés pour appliquer le même traitement de manière à augmenter la capacité de l'installation.

## Claims

1. A seafood product processing installation, in particular shellfish, such as shrimps or langoustines, by at least one appropriate processing liquid, which installation includes:
- at least one processing station (1) fitted with means (2) for applying said processing liquid on said seafood products, and
- means (3, 45, 56) for conveying said products, in order to ensure the transport thereof via notably said processing station(s),
**characterised in that** means (2) for applying the processing liquid are made of means (4) for adding processing liquid into a spraying tub (5), said spraying tub (5) being composed of a bottom element (6) delineated by a belt of walls (7) which bottom element (6) forms a horizontal or substantially horizontal surface extending above said conveying means (3, 45, 56), and is fitted with a plurality of perforations (8) enabling the distribution of said processing liquid in the form of a spray, which perforations (8) occupy a horizontal or substantially horizontal surface delineating the processing surface (15) of said products, and
which means (4) for adding processing liquid consists of a feeding ramp generally tubular in shape, whereof the section extending above the spraying tub (5) is fitted with a plurality of orifices (50), ensuring distribution of the processing liquid inside said spraying tub (5).

2. An installation according to claim 1, **characterised in that** the distance h between the spraying structure (2) and the conveying support (3,45,56) of the products to be processed is max. 25 cm.

3. An installation according to any of the claims 1 or 2, **characterised in that** it includes moreover means (9) for collecting the processing liquids extending at least below the processing surface (15), and below the means (3, 45,56) for conveying the products to be processed.

4. An installation according to claim 3, **characterised in that** the means (9) ensuring collection of the processing liquids are connected to the processing liquid spraying structure (2) by a pumping system (10) ensuring recycling of said liquids, said recycling being performed via a filtering system (11) and being associated with a means (12) for controlling and managing the temperature of said liquids.

5. An installation according to any of the claims 1 to 4, **characterised in that** it comprises containers (47, 57) for conditioning products, said containers (47, 57) include a down face and possibly a top face, fitted with a plurality of perforations to enable the processing liquid to trickle down on the products to be processed, loaded inside said containers (47, 57), then the evacuation thereof.

6. An installation according to any of the claims 1 to 5, **characterised in that** the means (56) for conveying said conditioning containers (57) consist of a system of conveying chains, said containers (57) are fitted with means (58) adapted for the interconnection thereof to the chain system (56).

7. An installation according to claim 6, **characterised in that** the system of conveying chains (56) is arranged so as to form a superimposition of belts (56a, 56b, 56c, 56d), whereas the containers (57) follow a back-and-forth route over several levels.

8. An installation according to any of the claims 1 to 5, **characterised in that** the means for conveying the products are formed of a single endless belt (3, 45).

9. An installation according to any of the claims 1 to 8, **characterised in that** it is adapted for de-structuring a block (21) of frozen seafood products, which installation includes at least:
- a processing station (23) by spraying at least one processing liquid (23') appropriate for destructuring said block (21) of seafood products, while maintaining said products in a frozen state, and
- a processing station (24) by spraying at least one processing liquid (24') appropriate for bringing said individualised frozen products (21') to an optimum temperature in view of conservation thereof.

10. An installation according to any of the claims 1 to 8, **characterised in that** it is adapted for defrosting frozen seafood products, which installation includes at least one defrosting station of said products by spraying at least one suitable processing liquid.

11. An installation according to any of the claims 1 to 8, **characterised in that** it is adapted for cooking frozen seafood products, which installation includes at least :
- a defrosting station (33) by spraying at least one suitable processing liquid (33') onto the frozen products (31),
- a cooking station (34) by spraying at least one suitable processing liquid (34') onto the defrosted products (31'), and
- a simple cooling or re-freezing station (35) by spraying at least one processing liquid (35') at appropriate temperature onto the cooked products (31 ").

12. An installation according to any of the claims 1 to 8, **characterised in that** it is adapted for cooking seafood products, which installation includes at least:
- a cooking station by spraying at least one suitable processing liquid onto the products, and
- a simple cooling or re-freezing station by spraying at least one appropriate processing liquid onto the cooked seafood products.

13. An installation according to any of the claims 1 to 8, **characterised in that** it includes at least one freezing station by spraying at least one appropriate processing liquid.

14. An installation according to claim 13, **characterised in that** it contains at least one cooled dripping zone (42).

15. An installation according to any of the claims 13 or 14, **characterised in that** it is integrated in an insulated enclosure (40, 55), fitted with fan systems (51) for homogeneous temperature of the surrounding air.

16. An installation according to claim 15, **characterised in that** it includes, just downstream of the freezing station, at least one station for coating the products with a thin ice film, which coating station is followed by an air-superfreezing station for bringing the products back to their conservation temperature.

17. An installation according to any of the claims 9 to 16, **characterised in that** it includes at least one additional processing station by a liquid containing an anti-oxidant product, such as metabisulphite for example.

18. An installation according to any of the claims 9 to 17, **characterised in that** it includes a plurality of successive processing stations used according to the processing type(s) implemented, whereas at least two successive processing stations may be used for applying the same treatment so as to increase the capacity of the installation.

## Patentansprüche

1. Anlage zur Behandlung von Meeresprodukten, insbesondere von Schalentieren wie Garnelen oder Hummern durch mindestens eine geeignete Behandlungsflüssigkeit, wobei die Anlage umfasst
- mindestens eine Behandlungsstation (1), die mit Mitteln zum Auftragen (2) der Behandlungsflüssigkeit auf die Meeresprodukte versehen ist, und
- Mittel (3, 45, 56) zum Befördern der Produkte, um ihr Befördern insbesondere über die Behandlungsstation(en) zu gewährleisten,
**dadurch gekennzeichnet, dass** die Mittel zum Auftragen (2) der Behandlungsflüssigkeit aus Behandlungsflüssigkeits-Zuführmitteln (4) in eine Sprühwanne (5) bestehen,
wobei die Sprühwanne (5) aus einem Bodenelement (6), das von einer Umgurtung aus Wänden (7) begrenzt ist, gebildet ist, wobei das Bodenelement (6) eine horizontale oder im Wesentlichen horizontale Fläche bildet, die sich oberhalb der Fördermittel (3, 45, 56) erstreckt und mit mehreren Perforierungen (8) versehen ist, die das Verteilen der Behandlungsflüssigkeit durch Sprühen erlauben, wobei die Perforierungen (8) eine horizontale oder im Wesentlichen horizontale Fläche belegen, die eine Behandlungsfläche (15) der Produkte abgrenzt, und
wobei die Behandlungsflüssigkeits-Zuführmittel (4) aus einer Versorgungsrampe mit allgemeiner Röhrenform bestehen, von der ein Abschnitt, der sich oberhalb der Sprühwanne (5) erstreckt, mit mehreren Öffnungen (50) versehen ist, die eine Verteilung der Behandlungsflüssigkeit in der Sprühwanne (5) sicherstellen.

2. Anlage nach Anspruch 1, **dadurch gekennzeichnet, dass** die Entfernung h zwischen der Sprühstruktur (2) und dem Förderträger (3, 45, 56) der zu behandelnden Produkte maximal 25 cm beträgt.

3. Anlage nach einem der Ansprüche 1 oder 2, **dadurch gekennzeichnet, dass** sie ferner Mittel (9) zum Rückgewinnen der Behandlungsflüssigkeiten aufweist, die sich mindestens unter der Behandlungsfläche (15) und unter den Fördermitteln (3, 45, 56) der zu behandelnden Produkte erstrecken.

4. Anlage nach Anspruch 3, **dadurch gekennzeichnet, dass** die Mittel (9), die das Rückgewinnen der Behandlungsflüssigkeiten sicherstellen, mit der Struktur (2) zum Sprühen der Behandlungsflüssigkeit über ein Pumpsystem (10) verbunden sind, das für die Rückführung der Flüssigkeiten sorgt, wobei die Rückführung durch ein Filtersystem (11) erfolgt und mit einem Mittel (12) zum Steuern und Verwalten der Temperatur der Flüssigkeiten verbunden ist.

5. Anlage nach einem der Ansprüche 1 bis 4, **dadurch gekennzeichnet, dass** sie Behälter (47, 57) zum Verpacken der Produkte aufweist, wobei die Behälter (47, 57) eine Unterseite umfassen und eventuell eine Oberseite, die mit mehreren Perforierungen versehen ist (sind), um das Rieseln der Behandlungsflüssigkeit auf die zu behandelnden Produkte, die in die Behälter (47, 57) geladen sind, innerhalb der Behälter (47, 57) und dann ihr Ableiten zu erlauben.

6. Anlage nach einem der Ansprüche 1 bis 5, **dadurch gekennzeichnet, dass** die Fördermittel (56) der Verpackungsbehälter (57) aus einem Förderkettensystem bestehen, wobei die Behälter (57) mit Mitteln (58) ausgerüstet sind, um sie fest mit dem Kettensystem (56) zu verbinden.

7. Anlage nach Anspruch 6, **dadurch gekennzeichnet, dass** das Förderkettensystem (56) derart angeordnet ist, dass es eine Überlagerung von Strängen (56a, 56b, 56c, 56d) bildet, wobei die Behälter (57) einen Hin- und Rückweg auf mehreren Stufen verfolgen.

8. Anlage nach einem der Ansprüche 1 bis 5, **dadurch gekennzeichnet, dass** die Fördermittel der Produkte aus einem einzigen Endlosförderband (3, 45) bestehen.

9. Anlage nach einem der Ansprüche 1 bis 8, **dadurch gekennzeichnet, dass** sie sich zum Aufbrechen eines Blocks (21) tiefgekühlter Meeresprodukte eignet, wobei die Anlage mindestens umfasst:
- eine Behandlungsstation (23) durch Sprühen mindestens einer Behandlungsflüssigkeit (23'), die sich zum Aufbrechen des Blocks (21) aus Meeresprodukten eignet und die Produkte gleichzeitig in einem gefrorenen Zustand hält und
- eine Behandlungsstation (24) durch Sprühen mindestens einer Behandlungsflüssigkeit (24'), die die einzelnen Gefrierprodukte (21') auf eine optimale Temperatur für ihre Konservierung bringen kann.

10. Anlage nach einem der Ansprüche 1 bis 8, **dadurch gekennzeichnet, dass** sie zum Auftauen gefrorener Meeresprodukte angepasst ist, wobei die Anlage mindestens eine Auftaustation der Produkte durch Sprühen mindestens einer geeigneten Behandlungsflüssigkeit umfasst.

11. Anlage nach einem der Ansprüche 1 bis 8, **dadurch gekennzeichnet, dass** sie zum Garen gefrorener Meeresprodukte angepasst ist, wobei die Anlage mindestens umfasst:
- eine Auftaustation (33) durch Sprühen mindestens einer geeigneten Behandlungsflüssigkeit (33') auf die gefrorenen Produkte (31),
- eine Garstation (34) durch Sprühen mindestens einer geeigneten Behandlungsflüssigkeit (34') auf die aufgetauten Produkte (31') und
- eine einfache Kühl- oder Gefrierstation (35) durch Sprühen mindestens einer Behandlungsflüssigkeit (35') mit geeigneter Temperatur auf die gegarten Meeresprodukte (31").

12. Anlage nach einem der Ansprüche 1 bis 8, **dadurch gekennzeichnet, dass** sie zum Garen von Meeresprodukten angepasst ist, wobei die Anlage mindestens umfasst:
- eine Garstation durch Sprühen mindestens einer geeigneten Behandlungsflüssigkeit auf die Produkte und
- eine einfache Kühl- oder Gefrierstation durch Sprühen mindestens einer geeigneten Behandlungsflüssigkeit auf die gegarten Meeresprodukte.

13. Anlage nach einem der Ansprüche 1 bis 8, **dadurch gekennzeichnet, dass** sie mindestens eine Gefrierstation durch Sprühen mindestens einer geeigneten Behandlungsflüssigkeit umfasst.

14. Anlage nach Anspruch 13, **dadurch gekennzeichnet, dass** sie darüber hinaus eine Abtropfzone unter Kühlung (42) umfasst.

15. Anlage nach einem der Ansprüche 13 oder 14, **dadurch gekennzeichnet, dass** sie in einen isolierten Raum (40, 55) integriert ist, der mit Lüftersystemen (51) ausgerüstet ist, die das Vereinheitlichen der Umgebungslufttemperatur erlauben.

16. Anlage nach Anspruch 15, **dadurch gekennzeichnet, dass** sie gleich stromabwärts der Gefrierstation mindestens eine Station aufweist, die das Überziehen der Produkte mit einer feinen Eishaut sicherstellt, wobei auf die Überziehstation eine Station zum Tiefkühlen mit Luft folgt, die die Produkte wieder auf ihre Konservierungstemperatur bringt.

17. Anlage nach einem der Ansprüche 9 bis 16, **dadurch gekennzeichnet, dass** sie mindestens eine Station zur ergänzenden Behandlung durch eine Flüssigkeit aufweist, die ein Antioxidationsmittel, beispielsweise Metabisulfit, enthält.

18. Anlage nach einem der Ansprüche 9 bis 17, **dadurch gekennzeichnet, dass** sie mehrere aufeinander folgende Behandlungsstationen umfasst, die je nach dem oder den eingesetzten Behandlungstyp(en) verwendet wird (werden), wobei mindestens zwei aufeinander folgende Behandlungsstationen zum Auftragen derselben Behandlung verwendet werden können, um die Kapazität der Anlage zu erhöhen.
